# EUROPÄISCHE PATENTANMELDUNG

(11) **EP 2 818 302 A1**
(43) Veröffentlichungstag der Anmeldung: **31.12.2014**
(21) Anmeldenummer: 14174602.4
(22) Anmeldetag: 26.06.2014
(51) Int. Cl.: B29C 49/06, B29C 49/52, B29C 49/12, B29C 49/36, B29C 49/58, B29C 49/46

(54) **Verfahren und Vorrichtung zum Umformen von Kunststoffvorformlingen zu Kunststoffbehältnissen**

(30) Priorität: 26.06.2013 DE 102013106694
(71) Anmelder: Krones AG, 93073 Neutraubling (DE)
(72) Erfinder: Winzinger, Frank, 93073 Neutraubling (DE)
(74) Vertreter: Hannke, Christian

(57) **Zusammenfassung**

Die Erfindung betrifft ein Verfahren zum Umformen von Kunststoffvorformlingen zu Kunststoffbehältnissen, bei welchem die Kunststoffvorformlinge innerhalb einer Blasform (5) unter Zuhilfenahme eines Expansionsmittels und einer Reckstange (8) zu den Kunststoffbehältnissen expandiert werden, und bei welchem zumindest die Blasform (5) und/oder die Reckstange (8) bedarfsweise wenigstens teilweise mit Sterilisationsmittel (32) sterilisiert werden, wobei zum Sterilisieren der Außenseite (36) der Reckstange (8) diese Reckstange (8) zumindest teilweise in die Blasform (5) hinein verlagert wird, und dass die Sterilisationsmittel (32) von einem außerhalb der Reckstange (8) angeordneten Ausbringelement (31) an die Mantelfläche (35) der Reckstange (8) gebracht werden.

## Beschreibung

Die Erfindung betrifft ein Verfahren zum Umformen von Kunststoffvorformlingen zu Kunststoffbehältnissen, bei welchem die Kunststoffvorformlinge innerhalb einer Blasform unter Zuhilfenahme eines Expansionsmittels und einer Reckstange zu den Kunststoffbehältnissen expandiert werden, und bei welchem zumindest die Blasform und/oder die Reckstange bedarfsweise wenigstens teilweise mit Sterilisationsmittel sterilisiert werden.

Die Erfindung betrifft des Weiteren eine Vorrichtung zum Umformen von Kunststoffvorformlingen zu Kunststoffbehältnissen mit wenigstens einer Blaseinrichtung umfassend eine Blasform und eine Reckstange, und mit einer Sterilisationseinrichtung und/oder Reinigungseinrichtung, mittels welcher die Blaseinrichtung zumindest teilweise sterilisierbar und/oder reinigbar ist.

Im Folgenden wird zur sprachlichen Vereinfachung teilweise anstelle von Sterilisation und/oder Reinigung nur von Sterilisation gesprochen. Es wird jedoch darauf hingewiesen, dass sich dieser Begriff ebenfalls auf eine Reinigung oder zumindest teilweise Entkeimung beziehen soll. Dies gilt entsprechend auch für Begriffe, welche den Bestandteil Sterilisation enthalten wie beispielsweise Sterilisationsmittel oder Sterilisationseinrichtung.

Gattungsgemäße Verfahren und Vorrichtungen zum Umformen von Kunststoffvorformlingen zu Kunststoffbehältnissen sind aus dem Stand der Technik gut bekannt. Neben dem eigentlichen Blasvorgang ist insbesondere auch eine gute Sterilisation der Komponenten einer Blaseinrichtung an einer Blasstation von großer Bedeutung, da diese Komponenten während der Herstellung der Kunststoffbehältnisse oftmals selbst, wenn auch nur bereichsweise, mit diesen Kunststoffvorformlingen und/oder Kunststoffbehältnissen in Kontakt kommen. Insbesondere bei gegenüber Keimen, Sporen oder dergleichen empfindlichen Lebensmitteln, wie etwa Fruchtsäften usw., sind sterile Werkzeuge von großer Bedeutung, weswegen einzelne Prozessabschnitte auch oftmals in einem Reinraum unter aseptischen Bedingungen durchgeführt werden.

Zum Sterilisieren wurden bereits eine Vielzahl an verschiedenen Einrichtungen, unterschiedlichen Methoden und Verfahrensvarianten entwickelt, um nicht nur die Kunststoffvorformlingen und die Kunststoffbehältnisse sondern darüber hinaus auch einzelne Komponenten der jeweiligen Blaseinrichtung mit geeigneten Sterilisationsmitteln, wie etwa Ozon (O₃), Hitze (Heißluft), Wasserstoffperoxyd (H₂O₂), Peressigsäure, anderen Chemikalien oder mit durch eine Elektronenquelle erzeugten Ladungsträgern, insbesondere Elektronen (ggfs. aber auch Protonen oder Alpha-Teilchen), zu behandeln. Hierdurch soll möglichst umfassend gewährleistet werden, dass speziell die hergestellten Kunststoffbehältnisse nicht kritisch durch Keime oder dergleichen kontaminiert sind, wenn sie mit sensiblen Lebensmitteln befüllt werden. Es könnte zur Sterilisation aber auch andere Strahlung wie UV-, Gamma oder Röntgenstrahlung eingesetzt werden. Insbesondere hat sich gasförmiges Wasserstoffperoxid als besonders günstig erwiesen. Soll lediglich eine Reinigung vorgenommen werden, so könnte dies mit einem reinigenden Schaum durchgeführt werden.

Es ist Aufgabe der Erfindung gattungsgemäße Verfahren und Vorrichtungen derart weiterzuentwickeln, dass Sterilisationsvorgänge von Komponenten einer Blaseinrichtung einer Vorrichtung zum Umformen von Kunststoffvorformlingen zu Kunststoffbehältnissen effektiver durchgeführt werden können.

Die Aufgabe der Erfindung wird von einem Verfahren mit den in den Ansprüchen 1 und 14 angegebenen Merkmalen gelöst.

Die Erfindung baut auf dem gattungsgemäßen Stand der Technik dadurch auf, dass zum Sterilisieren der Außenseite der Reckstange diese zumindest bereichs- oder teilweise in die Blasform hinein verlagert wird, und dass die Sterilisationsmittel von einem außerhalb der Reckstange angeordneten Ausbringelement und/oder einer Blasdüse an zumindest einen Teil der Mantelfläche der Reckstange gebracht werden, insbesondere während die Reckstange (8) in der Blasform (5) angeordnet ist.

Dadurch, dass die Sterilisationsmittel von außerhalb der Reckstange auf einen Teil der oder die gesamte Mantelfläche der Reckstange gestrahlt oder gebracht werden, während diese in die Blasform hinein und/oder aus der Blasform heraus verlagert und insbesondere zwischen zwei Blasformhälften der Blasform temporär positioniert wird, ist eine insbesondere zwischen einzelnen Blasvorgängen besonders effektive Sterilisation der Reckstange möglich, ohne das konstruktiv aufwendig viel verändert werden muss.

Hierdurch wird erzielt, dass die Zeitspanne zwischen aufeinanderfolgenden Expansionsvorgängen zweier Kunststoffvorformlingen aufgrund der Sterilisation der Reckstange nicht unnötig verlängert wird, so dass die Kunststoffvorformlingen idealerweise ohne durch einen Sterilisationsvorgang bedingte Verzögerung gewohnt schnell hintereinander zu den Kunststoffbehältnissen geblasen werden können.

Eine Sterilisation kann einerseits während des Produktionsprozesses durchgeführt werden und/oder aber auch während einem separatem Sterilisationsmodus, in welchem keine Behälter produziert werden und welcher in bestimmten Abständen vor einem Produktionszyklus durchgeführt wird. Dies ist abhängig von den jeweiligen Bedingungen, unter denen die Behälter produziert werden. Befindet sich beispielsweise die Reckstange komplett und ständig in einem Reinraum, so ist es nicht unbedingt notwendig, nach jeder geblasenen Flasche oder ständig eine Sterilisation der Reckstange durchzuführen. Befindet sich die Reckstange nicht im Reinraum oder weist die Maschine gar keinen Reinraum auf, so ist eine Kontamination der Reckstange wahrscheinlicher. Deswegen ist es hier von Vorteil, eine Sterilisation häufiger durchzuführen. Ebenso ist die Häufigkeit einer Sterilisation abhängig vom abzufüllenden Produkt.

Bei einem weiteren vorteilhaften Verfahren wird ein Bereich der Mantelfläche der Reckstange gereinigt und/oder sterilisiert, welcher in einem normalen Produktionsbetrieb ständig von der Blasdüse verdeckt ist und zwar insbesondere durch Hochfahren der Blasdüse und/oder durch weiteres Herunterfahren der Reckstange als im Produktionsmodus (d.h. verglichen mit einer Stellung der Reckstange im Produktionsmodus).

Beispielsweise können bei entsprechender Ausgestaltung der Blaseinrichtung die Sterilisationsmittel über ein oder mehrere Blasluftkanäle der Blasdüse von außen an einen Teil oder die gesamte Mantelfläche der Reckstange geleitet werden. Dies könnte auch bei geschlossener, jedoch leerer Blasform erfolgen, wenn die Reckstange außerplanmäßig, also nicht zum axialen Recken eines Kunststoffvorformlings, in die Blasform hinein und/oder aus der Blasform hinaus verlagert wird.

Beispielsweise wird die Reckstange hierbei durch einen elektrischen Motor, insbesondere einem Linearmotor, angetrieben, wobei diese dann beim Herunterfahren und/oder Hochfahren und/oder beim Verweilen in der unteren Stellung mit Sterilisationsmitteln besprüht, begast bzw. behandelt werden kann. Es ist denkbar, dass die Reckstange auch durch andere Antriebsmittel entsprechend bewegt werden kann, beispielsweise pneumatisch oder hydraulisch oder durch Verwendung einer Führungskurve. Die Führungskurve könnte zu diesem Zweck verfahrbar ausgestaltet sein oder die Reckstange wird von der festen Kurvenbahn ausgekuppelt.

Insbesondere wird die Reckstange während des Sterilisierens um einen Hub herausgefahren, welcher größer ist als der Hub, der während des Produktionsprozesses zurückgelegt wird. Auf diese Weise ist auch noch der Teil der Reckstange, welcher sich normalerweise oberhalb (in einer von der Blasform wegweisenden Richtung) einer Dichtung oder der die Reckstange koaxial umschließenden Blasdüse befindet, sterilisierbar. Dies ist insbesondere in der Situation möglich, wenn sich kein Vorformling in der Blasform befindet, da die Reckstange dann bis zum Boden der Blasform gefahren werden kann, also um die Materialdicke des Vorformlings (bei Vorformlingen mit einem Anspritzpunkt am Boden beträgt der Wert mehr als zwei Milimeter).

Insbesondere ist der Teil der Mantelfläche der Reckstange, welcher von Sterilisationsmittel kontaktiert wird, größer als der Teil, der sich im normalen Produktionsprozess unterhalb einer Blasluftdichtung oder der umschließenden Blasdüse maximal befindet.

Es ist aber nicht nur die Blasluftdichtung entscheidend, sondern auch ob der Teil der Reckstange von der Blasdüse oder Material in einem Ventilblock verdeckt wird. Insbesondere ist die Blasdüse im Moment der Reinigung oder Sterilisation der Reckstange hierzu in einer oberen bzw. Von der Blasform abgewandten Position.

Der angesprochene Teil der Reckstange ist sozusagen insbesondere radial frei zugänglich.

Wird der Boden der Blasform zusätzlich in einem Bereich (üblicherweise in einem Ausbringbereich für die Behälter, beispielsweise in Drehrichtung des Blasrades gesehen zwischen Auslaufstern und Einlaufstern) heruntergefahren, so kann die Reckstange in diesem Bereich nochmal zusätzlich um eine weitere Distanz (maximal um den maximalen Hub der Bodenbewegung der Blasform) heruntergefahren werden. So wird nochmal ein großer Teil der Außenoberfläche der Reckstange für eine Sterilisation "freigelegt". Dieser Bereich befindet sich üblicherweise in einem Ventilblock und ist kaum zugänglich.

Wenn der Boden ebenfalls nicht fest durch Kurven gesteuert wird, wäre es auch denkbar, den Boden, beispielsweise mittels eines Elektromotors, "außerplanmäßig" während eines Sterilisationszyklus herabzufahren, um an die nur schwer erreichbaren Bereiche der Reckstange mit dem Sterilisationsmittel zu kommen.

Der Begriff "bedarfsweise" beschreibt im Sinne der Erfindung, dass insbesondere die Reckstange und/oder die Blasdüse der Blaseinrichtung zwischen einzelnen Expansionsprozessen sterilisiert werden. Bevorzugt bewegen sich die Kunststoffvorformlinge wenigstens zeitweise während ihrer Expansion und besonders bevorzugt bewegen sie sich entlang einer wenigstens abschnittsweise kreisförmigen Bahn.

Idealerweise befindet sich hierbei innerhalb der Blasform weder ein Kunststoffvorformling noch ein hieraus hergestelltes Kunststoffbehältnis. Das heißt, die Blasform ist leer. Auf diese Weise kann neben der Reckstange auch die Blasform zumindest bereichsweise sterilisiert werden.

Die Begrifflichkeit "Mantelfläche" beschreibt im Sinne vorliegender Erfindung die komplette Außenfläche der Reckstange bzw. auch der Blasdüse, sollte letztere bei einer Verfahrensvariante ebenfalls sterilisiert werden.

Als Sterilisationsmittel können beispielsweise Ozon (O₃), Wasserstoffperoxyd (H₂O₂), gasförmig oder flüssig, andere Chemikalien, Dampf oder durch eine Elektronenquelle erzeugten Ladungsträger oder UV-Licht, Hitze, Gammastrahlung oder dergleichen eingesetzt werden.

Insbesondere können sich die Mittel zum auftragen bzw. bestrahlen, bedampfen oder begasen auf dem drehenden Teil der Maschine befinden. Flüssige oder gasförmige Sterilisationsmittel könnten vom stationären Teil über einen Drehverteiler in die Maschine geleitet werden. Insbesondere ist es hier möglich, dieselben Leitungen und Wege, wie die Blasluft zu verwenden. Ein Beispiel hierfür ist die Sterilisation der Reckstange durch die Blasdüse.

Die Mittel zum auftragen bzw. bestrahlen, bedampfen oder begasen können sich alternativ oder zusätzlich auch auf dem stationären Teil befinden.

Die Aufgabe der Erfindung wird ebenfalls von einer Vorrichtung zum Umformen von Kunststoffvorformlingen zu Kunststoffbehältnissen, kurz Umformvorrichtung, mit den im Anspruch 9 angegebenen Merkmalen gelöst.

Die Erfindung baut ferner auf dem gattungsgemäßen Stand der Technik dadurch auf, dass wenigstens eine Sterilisationseinrichtung derart gegenüber einer Blasform angeordnet ist, dass die Reckstange von außerhalb der Reckstange mit Sterilisationsmittel behandelt werden kann, wenn die Reckstange in die Blasform hinein verlagert ist.

Mittels einer derartigen Umformvorrichtung kann zumindest ein Teil der Mantelfläche der Reckstange besonders gut mit Sterilisationsmitteln behandelt werden, wenn die Reckstange außerplanmäßig, also nicht zum Zwecke einer axialen Expansion eines Kunststoffvorformlings, in die Blasform hinein und/oder aus der Blasform heraus verlagert bzw. bewegt wird.

Insofern kann mittels der vorliegenden Umformvorrichtung auch insbesondere das erfindungsgemäße Verfahren vorteilhaft durchgeführt werden.

Jedenfalls können mittels der Umformvorrichtung und insbesondere auch mittels des erfindungsgemäßen Verfahrens sehr viele Bereiche von an einer Blaseinrichtung vorhandenen Komponenten sterilisiert werden.

Das erfindungsgemäße Verfahren kann vorteilhaft weiterentwickelt werden, wenn zum Sterilisieren einer Blasdüse zum Einbringen des Expansionsmediums in die Blasform diese Blasdüse zumindest teilweise in die Blasform hinein verlagert wird.

Hierdurch gelingt es, auch die Blasdüse an ihrer Mantelfläche kumulativ oder alternativ vorteilhaft mit Sterilisationsmitteln zu behandeln, wodurch an der Blaseinrichtung antiseptische Bedingungen wesentlich umfassender und zuverlässiger gewährleistet werden können.

Bei einer entsprechend ausgestalteten Blaseinrichtung kann es oftmals für eine derartige Sterilisation schon genügen, wenn die Blasdüse nur bis oberhalb der Blasform verlagert ist.

Der Sterilisationsvorgang kann besonders unauffällig in einen Blaszyklus an einer Blasstation eingebunden werden, wenn die Sterilisationsmittel bei zumindest teilweise geöffneter Blasform von außen an die Mantelfläche der Reckstange und/oder an die Mantelfläche einer Blasdüse gebracht werden.

Eine vorteilhafte Verfahrensvariante sieht in diesem Zusammenhang auch vor, dass die Reckstange und/oder eine Blasdüse in die Blasform hinein verlagert wird, wenn die Blasform eine Umlaufstrecke zwischen einem Auslaufbereich zum Ausbringen eines aus dem Kunststoffvorformling expandierten Kunststoffbehältnisses und einem Einlaufbereich zum Einbringen eines Kunststoffvorformlings in die Blasform durchläuft.

Insbesondere im Hinblick auf eine Vorrichtung zum Umformen von Kunststoffvorformlingen zu Kunststoffbehältnissen mit einem Blasrad, welches mit einer Vielzahl an Blasstationen, die wiederum jeweils eine Blaseinrichtung umfassen, ausgerüstet ist, wird die Blasform der jeweiligen Blaseinrichtung im Bereich einer derartigen Umlaufstrecke prozessbedingt geöffnet, um ein zuvor geblasenes Kunststoffbehältnis im Bereich eines entsprechenden Auslaufsterns aus der geöffneten Blasform zu entnehmen. Bevor nun ein neuer Kunststoffvorformling an einem in Umlaufrichtung des Blasrades hinter dem Auslaufstern angeordneten Einlaufstern in diese Blasform eingebracht wird, können insbesondere die Reckstange und/oder die Blasdüse in die geöffnete Blasform eingefahren und von außen mit Sterilisationsmitteln behandelt werden.

Vorteilhaft rotiert das Blasrad um eine vertikal verlaufende, also zum Erdmittelpunkt hin gerichtete, Rotationsachse. Vorteilhaft weist die Vorrichtung einen Reinraum auf, innerhalb dessen die Kunststoffvorformlinge zu den Kunststoffbehältnissen umgeformt werden. Dieser Reinraum kann dabei bevorzugt den Transportpfad der Kunststoffbehältnisse kanalartig umgeben. Weiterhin können auch Dichtungseinrichtungen vorgesehen sein, welche den Reinraum gegenüber einer (unsterilen) Umgebung abgrenzen. Dabei können insbesondere hydraulische Dichtungen wie beispielsweise sog. Wasserschlösser zum Einsatz kommen.

Insbesondere rotiert das Blasrades zumindest zeitweise während des Sterilisationsprozesses.

Ein solches zusätzliches Einfahren der Reckstange bzw. der Blasdüse in die Blasform wird gegenüber herkömmlichen Verfahren vorliegend vorteilhaft außerplanmäßig durchgeführt.

Ein Öffnen und Schließen der Blasform erfolgt hierbei vorzugsweise in bekannter Weise, bei welcher die Blasformhälften einer jeden Blasform an Trägerelementen eines Blasformträgers gehaltert sind, wobei diese Trägerelemente um eine gemeinsame Drehachse derart gelagert sind, dass sie um diese Drehachse aufeinander zu oder voneinander weg schwenkbar sind.

Der Vorteil hierbei ist, dass zum Öffnen der Blasform ein bereits schon vorhandener Öffenund Schließmechanismus, der etwa entsprechende Kurvenbahnen zum Betätigen einer Öffen- und Schließeinrichtung umfasst, verwendet werden kann, so dass sich selbst bereits in Betrieb befindliche Umformvorrichtungen durch vorliegende Sterilisationseinrichtung konstruktiv einfach nachrüsten und auf das erfindungsgemäße Verfahren umrüsten lassen.

Es ist denkbar, dass das vorliegende Verfahren auch mittels Umformvorrichtungen durchgeführt werden kann, welche eine derartige durch ein Blasrad bedingte Umlaufstrecke nicht aufweisen, sondern anderer Gestalt sind, zum Beispiel stationäre Taktmaschinen.

Eine alternative Verfahrensvariante sieht vor, dass die Reckstange und/oder eine Blasdüse in die Blasform hinein verlagert wird, wenn die Blasform einen Blasformwechselbereich durchläuft, in welchem bedarfsweise ein Wechsel von verschiedenen Blasformen zum Blasen unterschiedlicher Behältnisse vorgenommen wird.

Auch hierdurch lässt sich ein bereits vorhandener Öffen- und Schließmechanismus für das vorliegende Verfahren verwenden. Und auch hierbei kann das erfindungsgemäße Verfahren nahezu verzögerungsfrei in einen bestehenden Blaszyklus integriert werden. Beispielsweise liegt der Blasformwechselbereich in einem Bereich von 20° in Umlaufrichtung des Blasrades gesehen hinter einem Einlaufstern und 20° in Umlaufrichtung gesehen vor dem Auslaufstern.

Werden die Sterilisationsmittel bei zumindest teilweise geöffneter Blasform von außerhalb der Blasform an die Mantelfläche der Reckstange und/oder an die Mantelfläche einer Blasdüse gebracht, kann eine entsprechende Sterilisationseinrichtung baulich einfach in eine gattungsgemäße Umformvorrichtung eingebaut werden.

Insofern sieht eine vorteilhafte Ausführungsvariante vor, dass die wenigstens eine Sterilisationseinrichtung derart gegenüber der Blasform (bzw. im Bereich der Blasform) angeordnet ist, dass die Reckstange von außerhalb der Blasform mit Sterilisationsmittel behandelt werden kann, wenn die Reckstange in die Blasform hinein verlagert ist. Gleiches gilt hinsichtlich der Blasdüse der Blaseinrichtung.

Das vorliegende Verfahren kann wesentlich weiterentwickelt werden, wenn die Reckstange und/oder eine Blasdüse bei einem Herausfahren aus einem Blaskopf bzw. Blaskolben der Sterilisationseinrichtung und/oder bei einem Hereinfahren in den Blaskopf mit Sterilisationsmitteln bestrahlt werden. Hierdurch kann der bereits schon vorhandene Antrieb der Reckstange bzw. der Blasdüse zu Sterilisationszwecken verwendet werden.

Bei einer weiteren Ausführungsform weist die Sterilisationseinrichtung und/oder Reinigungseinrichtung wenigstens ein Ausbringelement zum Ausbringen der Sterilisationsmittel und/oder Reinigungsmittel auf und die Ausbringeinrichtung bzw. Düse der Sterilisationseinrichtung und/oder der Reinigungseinrichtung ist in der Höhe (d. h. entlang einer Längsrichtung) im Bereich zwischen einem Ventilblock der Blasstation und der Blasform angeordnet.

Weist die wenigstens eine Sterilisationseinrichtung wenigstens ein Ausbringelement bzw. eine Beaufschlagungseinrichtung zum Ausbringen der Sterilisationsmittel auf, wobei das wenigstens eine Ausbringelement radial neben der in die Blasform hinein verlagerten Reckstange angeordnet ist, können die Sterilisationsmittel von außerhalb problemlos radial auf die Reckstange bzw. auch auf die Blasdüse geleitet werden.

Ist das wenigstens eine Ausbringelement (insb. stationär) am Umfang eines eine Vielzahl an Blaseinrichtungen umfassenden Blasrades angeordnet, kann die vorliegende Umformvorrichtung besonders kompakt gebaut werden. Dabei ist bevorzugt das Ausbringelement bzw. die Beaufschlagungseinrichtung stationär angeordnet und die einzelnen Blasstationen bewegen sich an dieser vorbei. Es wäre jedoch auch möglich, dass sich ein Ausbringelement oder eine Vielzahl von Ausbringelementen auf dem Träger, an dem auch die einzelnen Blaseinrichtungen angeordnet sind, befindet. Dabei wäre es möglich, dass je ein Ausbringelement wenigstens einer Blaseinrichtung bzw. einer Umformstation zugeordnet ist.

Die Sterilisationsmittel können auf der gesamten Länge der Reckstange besonders zuverlässig bis an die Reckstange bzw. Blasdüse geleitet werden, wenn das wenigstens eine Ausbringelement radial und/oder axial verlagerbar gegenüber der Reckstange angeordnet ist. Hierfür ist die Reckstange frei zugänglich ausgebildet. Oftmals ist dies jedoch nicht der Fall und es können nur Teilbereiche der Reckstange sterilisiert werden.

Vorteilhaft ist es ferner, wenn das wenigstens eine Ausbringelement eine Sprühdüse und/oder einen Strahlenemitter umfasst. Hierdurch können unterschiedliche Sterilisationsmittel eingesetzt und entsprechend auf die Oberflächen der zu sterilisierenden Oberfläche gestrahlt werden.

Es können vorteilhaft auch zwei oder mehr Ausbringelemente an unterschiedlichen Positionen am Umfang des Blasrades verteilt vorhanden sein, welche die Blasformen bzw. auch die Blasformträger einmal in einem geschlossenen Zustand und einmal in einem offenen Zustand sterilisieren. Auch können sich die Sterilisationsmittel bei mindestens 2 Ausbringelementen voneinander unterscheiden. Auch können durch ein Ausbringelement nacheinander unterschiedliche Sterilisationsmittel eingesetzt werden.

Es versteht sich, dass insbesondere die Reckstange zu unterschiedlichen Zeitpunkten im Sinne der Erfindung außerplanmäßig verlagert werden kann, um diese im Sinne vorliegender Erfindung zu sterilisieren. So ist es möglich, dass die Reckstange und/oder eine Blasdüse vor, während oder nach einem zumindest teilweisen Öffnen der Blasform in einen Bereich zwischen den beiden Blasformhälften verlagert werden.

Speziell wenn erst noch ein zuvor expandiertes Kunststoffbehältnis aus der Blasform entnommen werden muss, ist es vorteilhaft, wenn die Reckstange bzw. die Blasdüse erst nachdem die Blasform geöffnet und das Kunststoffbehältnis entnommen wurde in die Blasform bzw. zwischen die Blasformhälften nacheinander oder gleichzeitig abgesenkt werden.

Darüber hinaus ist es vorteilhaft, wenn die Reckstange zumindest teilweise über die Bodenteil-Position einer betriebsbereiten Blasform hinaus verlagert wird.

Vorteilhaft wird hierfür das Bodenteil zusätzlich abgesenkt, wenn die Blasformhälften ausreichend weit auseinander geschwenkt wurden.

Hierdurch kann sichergestellt werden, dass die Reckstange wesentlich weiter als bei einem normalen Reckvorgang in die Blasform hinein verlagert werden kann, wodurch auch Bereiche der Reckstange mit Sterilisationsmitteln erreicht werden können, die üblicherweise von anderen Bauteilen der Blaseinrichtung verdeckt sind. Hierdurch kann die Gefahr einer Keimausbreitung durch ansonsten abgedeckten und daher nicht abgetöteten Keimen weiter reduziert werden.

Alternativ könnte auch eine öffenbare Öffnung bzw. Aussparung in dem Bodenteil zum Durchführen der Reckstange durch das Bodenteil vorgesehen sein, um die Reckstange über die Bodenteil-Position hinaus zu verlagern. Alternativ könnte das Bodenteil auch horizontal aus dem Bereich der Reckstange weggeschwenkt werden.

An dieser Stelle sei noch erwähnt, dass neben der Reckstange und der Blasdüse bei entsprechender Verfahrensführung auch weitere Komponenten der Blaseinrichtung sterilisiert werden können, wie etwa die Blasform selbst bzw. deren Verriegelungselemente bzw. Klammerelemente, der Blasformträger, die Mutterform oder dergleichen.

Auch wäre es denkbar, das Blasrad nach der Entnahme der Bodenform (oder Blasform) (insb. vollständig) umlaufen zu lassen, um während dieses Zeitraums die Reckstange und/oder die Blasdüse zu sterilisieren.

Die Erfindung ist weiterhin auf ein Verfahren zum Umformen von Kunststoffvorformlingen zu Kunststoffbehältnissen mit einem zumindest in einem Produktions- bzw. Betriebsmodus kontinuierlich angetriebenen Blasrad gerichtet, an welchem eine Vielzahl von Blasstationen angeordnet sind und jede Blasstation relativ zum Blasrad bewegliche Elemente wie beispielsweise eine Reckstange zur Längsdehnung der Vorformlinge oder mindestens eine öffenbare Blasform zum Ausbringen der expandierten Kunststoffbehältnisse umfasst, bei welchem die Kunststoffvorformlinge innerhalb der Blasform unter Zuhilfenahme eines Expansionsmittels und der Reckstange zu den Kunststoffbehältnissen expandiert werden, und bei welchem in einem Reinigungs- und/oder Sterilisationsmodus und/oder im Produktionsmodus zumindest eine Teilfläche eines bewegten Elements mit Sterilisations- und/oder Reinigungsmittel gereinigt und/oder sterilisiert wird.

Erfindungsgemäß wird zumindest dieses eine bewegte Element im Reinigungs- und/oder Sterilisationsmodus an eine Position oder in eine Orientierung verfahren, welche sich von den Positionen und/oder Orientierungen des normalen Betriebsmodus unterscheidet. Hierdurch wird ebenfalls die eingangs genannte Aufgabe gelöst.

Mit dem Unterschied ist bei einem rotierenden Blasrad gemeint, dass das Element an einer bestimmten Position in Umfangsrichtung des Blasrads anders positioniert (orientiert) wird, als es das genau an dieser Umfangsposition im regulären Betrieb würde. In einer Weiterbildung kann das Element auch eine Position (oder Orientierung) gebracht werden, welche im regulären Betrieb nie erreicht wird.

Bezogen auf einen Blasformwechsel kann die einzusetzende Blasform als im Produktionsbetrieb bewegtes Element beispielsweise in einem Wechselbetrieb in einer Position und/oder Orientierung beim Wechsel sterilisiert werden, in der sie sich im Produktionsbetrieb nicht befindet.

Auf diese Weise ist es beispielsweise möglich, auch die Flächen zu sterilisieren, welche im Produktionsmodus nicht sterilisiert werden. Als Beispiel für die Fläche ist die Spannfläche zu nennen, an der die Blasform in einem Blasformhalter gehaltert wird, aber auch die Außenfläche der Blasform, welche normalerweise im Produktionszyklus am Blasformhalter, insbesondere vollflächig, anliegt.

Im Wechselmodus wird deswegen das bewegte Element, insbesondere die Blasform oder die Bodenform, zuerst von seinem Halter gelöst, dann von diesem entfernt, und dann sterilisiert.

Ebenso kann im Wechselmodus ein neu einzusetzendes Element zuerst in eine Position entfernt vom Halter gebracht werden, wo es sterilisiert wird und dann eingesetzt wird.

Ebenso kann die Auflagefläche am Halter für das Element vor dem Einsetzen des neuen bzw. nach dem Entnehmen des alten Elements sterilisiert werden.

Insbesondere wird der Wechsel von einem Automaten wie einem Roboter durchgeführt, welcher mit Greifarmen für das Greifen der auszuwechselnden Elemente bestückt ist. Insbesondere ist der Roboter stationär angeordnet und wechselt die Elemente an mehreren Blasstationen nacheinander. Hierfür kann sich das Blasrad am Roboter schrittweise vorbeidrehen und zum Wechseln der Elemente einer Blasstation kurz anhalten. Theoretisch wäre auch ein kontinuierlicher Wechsel möglich.

Die Sterilisationsdüse ist hierfür insbesondere in einem Bereich angeordnet, welcher auch im erreichbaren Bereich des Roboters angeordnet ist. Sollte ein Bediener den Wechsel vornehmen, ist die Sterilisationsdüse im Zugriffsbereich von diesem Bediener angeordnet.

Wenn die Blasdüse der Blasstation zur Sterilisation verwendet wird, so versprüht insbesondere nur die Düse der Blasstation Sterilisationsmittel, bei welcher auch gerade der Wechsel vorgenommen wird. Der Roboter oder ein Bediener kann in diesem Fall die Blasformen unterhalb dieser Düse für die Sterilisationszeit anordnen.

Insbesondere können der Wechselroboter zumindest bereichsweise und das Blasrad zumindest bereichsweise in einem Reinraum angeordnet sein, das Verfahren eignet sich aber auch sehr gut beim Einsatz unter nur hygienischen Bedingungen.

Unter einem Automaten oder einem Roboter wird auch ein Entnahme- und/oder Einbringstern zum Transportieren der Elemente und insbesondere Blasformen verstanden. Die Blasformen werden bevorzugt in einem zusammengesetzten Zustand gelagert, um möglichst viel Platz zu sparen. Das Zusammensetzen kann vor oder nach dem Herausnehmen der Blasformen vom Blasformträger geschehen. Hierzu können zusätzliche Spannmittel an der Blasform angeordnet werden, welche die zwei Blasformhälften und ggf. noch zusätzlich den Boden aneinander halten.

Befinden sich das Blasrad zumindest teilweise und die im Produktionseinsatz befindlichen Blasformen in einem Reinraum, so ist es bevorzugt, wenn sich das Magazin, in dem sich die nicht im Einsatz befindlichen Blasformen befinden, ebenfalls in einem Reinraum befindet.

Insbesondere wird auch der Roboter bzw. zumindest seine die Blasformen kontaktierenden Elemente (z.B. Klammern) in regelmäßigen Abständen sterilisiert.

Ein Reinraum zeichnet sich im Wesentlichen dadurch aus, dass er mit Sterilluft derart unter Überdruck gehalten wird, dass möglichst wenig Luft von der äußeren Atmosphäre in den Reinraum eindringen kann.

Weiterhin ist es möglich, dass in der Position oder Orientierung mindestens eine Fläche des Elements sterilisiert und/oder gereinigt wird, deren Zugänglichkeit für eine Reinigung und/oder Sterilisation im normalen Produktionsmodus, beispielsweise aufgrund der Anordnung hinter Dichtungen oder anderen, insbesondere bewegten, Elementen, beschränkt wird.

Insbesondere wird im Sterilisationsmodus, in dem die Reckstangen über die Blasluftleitungen und die Blasdüse sterilisiert werden, das Blasrad kontinuierlich angetrieben. Auf diese Weise kann das Sterilisationsmittel durch die Luftverwirbelung an weitere Flächen anderer Elemente transportiert werden. Hierzu kann mindestens eine Blasform, bevorzugt alle, zu einem Zeitpunkt auch geöffnet werden.

Ebenfalls ist es denkbar, die Blasform auch für einen Zeitraum während des Sterilisationszyklus geschlossen zu halten, um ein Durchspülen der Blasform mit Sterilisationsmittel zu erreichen. Insbesondere kann hierfür die Reckstange hohl ausgebildet sein und es wird in diesem Zeitraum ein kontinuierlicher Fluss von Sterilisationsmittel von der unten offenen Reckstangenspitze (oder seitlichen Löchern) zu der Blasdüse hergestellt, durch die das Sterilisationsmittel wieder in Richtung Luftleitungen geleitet wird, um diese ebenfalls zu sterilisieren. In der anderen Richtung (von der Blasdüse in die Reckstangenspitze) ist dies natürlich auch möglich. Hierfür ist die Reckstange insbesondere auch heruntergefahren.

Bei dem bewegten Element kann es sich z.B. um die Reckstange, die Blasform oder eine Blasformhälfte, ein Bodenteil der Blasform, einen Träger für die Blasformen, eine Zwischenschale, welche zwischen dem Träger und der Blasform angeordnet ist, eine Verriegelung (z.B. ein Haken oder eine Welle), eine Blasdüse, einen Reckanschlag, ein Druckkissen, einen Ventilkolben der Blasventile, eine Steuerkurve, eine Klammer an der Blasstation zur Aufnahme von Vorformlingen bzw. Behältern, oder Hebel bzw. Wellen, mit welchen die bewegten Teile angesteuert werden, handeln.

Handelt es sich bei dem Element um mindestens einen Teil einer Blasform, so kann dieser Teil während eines zwischen zwei aufeinander folgenden Produktionsmodi durchgeführten Formwechselmodus durch einen Teil einer anderen Blasform ersetzt werden. Insbesondere wird der entnommene Teil (5) nach der Entnahme und/oder der neu einzusetzende Teil (5) vor dem Einsetzen gereinigt und/oder sterilisiert.

Allgemein kann sich der Reinigungs- und/oder Sterilisationsmodus mit dem Formwechselmodus und/oder dem Produktionsmodus zumindest zeitweise überschneiden. Dabei kann ein Element, beispielsweise die Reckstange, im Produktionsmodus sterilisiert werden und die Blasform im Formwechselmodus sterilisiert werden.

Im Formwechselmodus wird der Innenraum der Maschine, also beispielsweise die Wände der Einhausung und die Blasformträger und die Transportsterne, insbesondere auf eine erhöhte Temperatur gebracht, so dass ein im Formwechselmodus eingebrachtes Sterilisationsmittel (gasförmiges Wasserstoffperoxid) nur wenig oder kaum an diesen Wänden kondensiert, diese aber sterilisiert. Insbesondere wird das Gas über die Blasdüsen in den Innenraum eingebracht. Insbesondere wird auch eine entnommene und/oder mindestens eine neu einzusetzende Blasform während dieses Prozesses erhitzt und sterilisiert. Nach der Sterilisation kann dann die Blasform in den Halter eingesetzt werden. Die entnommene Blasform kann entweder aus dem Innenraum, insbesondere durch eine Schleuse, entfernt und außerhalb der Maschine in einem Magazin gelagert werden, oder sie verbleibt innerhalb des Innenraums an dafür vorgesehenen Haltern bzw. Lagerplätzen.

Bei einem weiteren vorteilhaften Verfahren sind die folgenden Schritte vorgesehen:
- Produktion von Behältern von mehreren auf einem Blasrad angeordneten Blasstationen (Produktionsmodus)
- Stoppen der Produktion
- Ausbringen von Sterilisationsgas aus der Blasdüse, welche eine Reckstange ringförmig umgibt (Sterilisationsmodus)
- Bewegen der Reckstange relativ zur Blasdüse während des Ausbringens von Sterilisationsgas

In den Ausgestaltungen des Verfahrens sind ebenfalls die Ausführungsformen des bereits dargestellten Verfahrens bzw. der Vorrichtung integrierbar.

Weitere Vorteile, Ziele und Eigenschaften vorliegender Erfindung werden anhand anliegender Zeichnung und nachfolgender Beschreibung erläutert, in welchen beispielhaft eine Umformvorrichtung zum Umformen von Kunststoffvorformlingen zu Kunststoffbehältnissen und zum Durchführen des erfindungsgemäßen Verfahrens dargestellt und beschrieben ist. In der Zeichnung zeigen:
- Figur 1: schematisch eine perspektivische Ansicht einer eine Blaseinrichtung umfassenden Blasstation einer Umformvorrichtung zum Umformen von Kunststoffvorformlingen zu Kunststoffbehältnissen;
- Figur 2: schematisch eine Aufsicht der Umformvorrichtung mit einer Vielzahl von an einem Blasrad angeordneten Blasstationen gemäß der Figur 1 und mit einer zwischen einem Auslaufstern und einem Einlaufstern platzierten Sterilisationseinrichtung, mittels welcher Sterilisationsmittel auf eine in die geöffnete Blasform hinein abgesenkte Reckstange von radial außerhalb der Blasform geleitet werden kann;
- Figur 3: schematisch eine teilweise geschnittene Ansicht der geöffneten Blasform entlang der Schnittlinie B-B aus Fig. 2 mit heruntergefahrener Reckstange und Blasdüse und abgesenktem Bodenteil;
- Figur 4: schematisch eine teilweise geschnittene Ansicht der geöffneten Blasform aus der Figur 2 in einer anderen Darstellung und in Richtung der Sterilisationseinrichtung;
- Figur 5: schematisch eine andere Aufsicht der Umformvorrichtung mit eingezeichneter Winkelmaßaufteilung in Umlaufrichtung des Blasrades;
- Figur 6: schematisch eine teilweise geschnittene Ansicht der Blaseinrichtung bei einem Winkelmaß von 300° mit eingefahrener Reckstange und heruntergefahrener Blasdüse;
- Figur 7: schematisch eine teilweise geschnittene Ansicht der Blaseinrichtung bei einem Winkelmaß von 350° mit heruntergefahrener Reckstange und eingefahrener Blasdüse;
- Figur 8: schematisch eine teilweise geschnittene Ansicht der Blaseinrichtung bei einem Winkelmaß von 10° mit teilweise wieder eingefahrener Reckstange und heruntergefahrener Blasdüse;
- Figur 9: schematisch eine andere teilweise geschnittene Ansicht der Blaseinrichtung bei einem Winkelmaß von 300° mit eingefahrener Reckstange und Blasdüse;
- Figur 10: schematisch eine andere teilweise geschnittene Ansicht der Blaseinrichtung bei einem Winkelmaß von 350° mit eingefahrener Reckstange und Blasdüse, bei welcher ein Ausbringelement zum Ausbringen der Sterilisationsmittel zwischen Blaskopf und Blasform angeordnet ist;
- Figur 11: schematisch eine andere teilweise geschnittene Ansicht der Blaseinrichtung bei einem Winkelmaß von 10° mit eingefahrener Reckstange und Blasdüse, bei welcher ein Ausbringelement zum Ausbringen der Sterilisationsmittel zwischen Blaskopf und Blasform angeordnet ist; und
- Figur 12: schematisch eine teilweise geschnittene Ansicht eines Ventilblocks einer alternativen Blaseinrichtung, bei welchem Sterilisationsmittel über Blasluftkanäle von außen an die Reckstange geleitet werden.

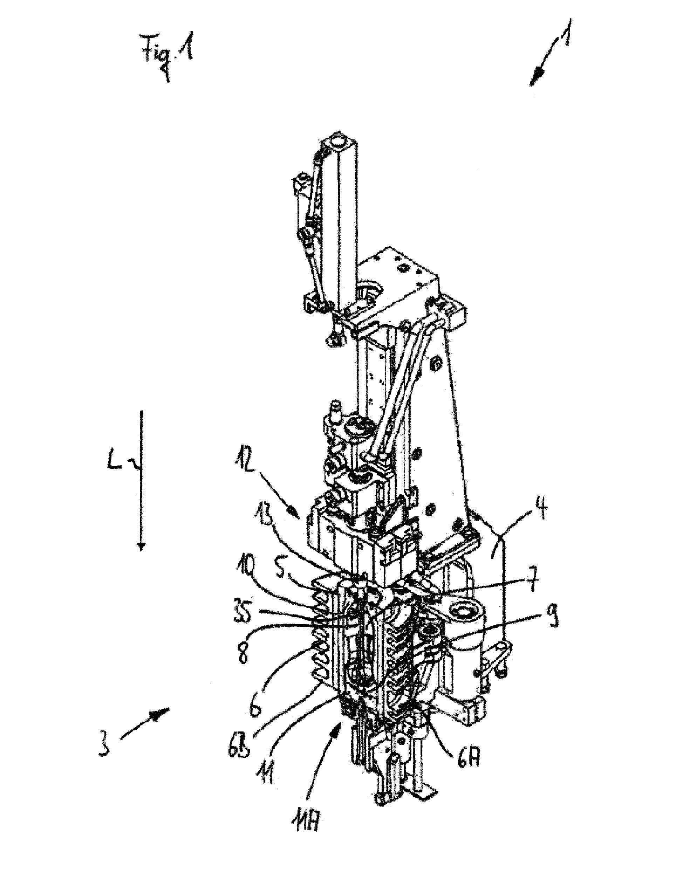

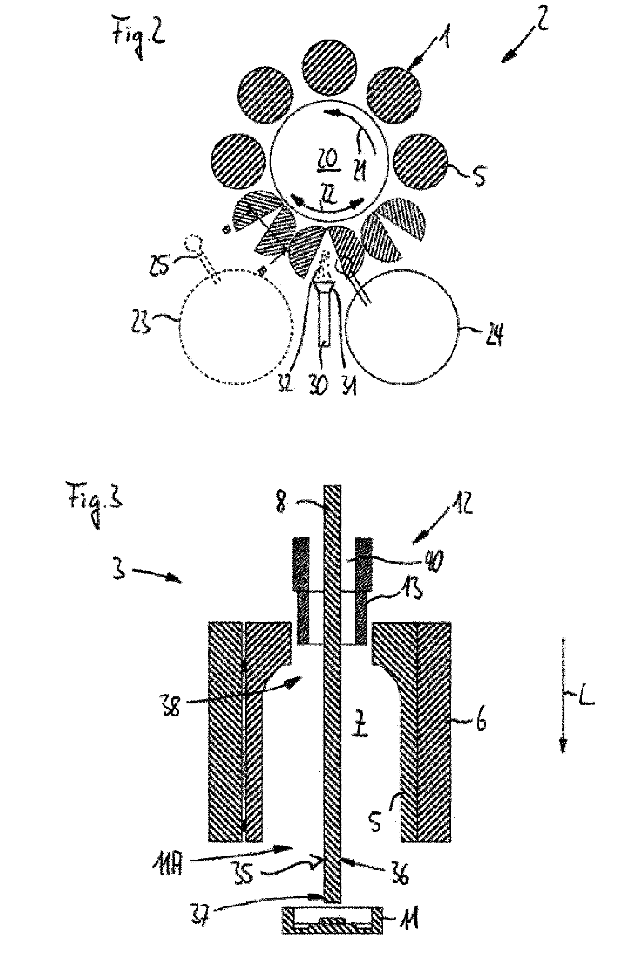

Die in der Figur 1 gezeigte Blasstation 1 ist eine von einer Vielzahl an Blasstationen 1 der in der Figur 2 schematisch gezeigten Umformvorrichtung 2 zum Umformen von Kunststoffvorformlingen (nicht gezeigt) in Kunststoffbehältnisse (ebenfalls nicht gezeigt).

Die Blasstationen 1 umfassen jeweils eine Blaseinrichtung 3, welche einen Hauptträger 4 aufweist, an dem eine Blasform 5 in einem Blasformträger 6 (jeweils nur teilweise dargestellt) angeordnet ist.

Innerhalb der Blasform 5 ist ein Hohlraum 7 ausgebildet, innerhalb dessen die Kunststoffvorformlinge zu Kunststoffbehältnissen durch Beaufschlagung mit Druckluft expandiert werden.

Weiterhin umfasst die Blaseinrichtung 3 eine Reckstange 8, die hier in der Längsrichtung L beweglich ist, um die Kunststoffvorformlinge zusätzlich während der Expansion durch die Druckluft zu dehnen.

Die Blasform 5 weist eine erste Blasformhälfte 9 und eine zweite Blasformhälfte 10 auf, welche jeweils in entsprechende Blasformträgerhälften 6A und 6B des Blasformträgers 6 gehaltert sind. Dabei können die Blasformhälften an Blasformträgerschalen und diese wiederum an den Blasformträgerhälften angeordnet sein.

Daneben weist die Blasform 5 noch ein Bodenteil 11 auf, welches im betriebsbereiten Zustand der Blasform 5 den Hohlraum 7 nach unten hin abschließt. Das Bodenteil 11 befindet sich in diesem betriebsbereiten Zustand der Blasform 5 nach der Darstellung gemäß der Figur 1 in einer Bodenteil-Funktionsposition 11A, in welcher auch das Bodenteil 11 den Hohlraum 7 begrenzt. Beim Öffnen der Blasform 5 kann das Bodenteil 11 in Längsrichtung L abgesenkt und hierbei von den Blasformhälften 9 und 10 entfernt werden. Zuvor werden üblicherweise die Blasformhälften senkrecht zu L weggeschwenkt. Die Blasstationen können auch vom Typ sein, bei denen nur eine Hälfte wegschwenkbar, die andere fest ist.

Darüber hinaus umfasst die Blaseinrichtung 3 noch eine Druckbeaufschlagungseinrichtung mit einem Blaskopf bzw. Blaskolben 12 und mit einer Blasdüse 13, welche die Kunststoffvorformlinge mit Druckluft beaufschlagt, so dass diese hierdurch innerhalb der Blasform 5 zu den jeweiligen Kunststoffbehältnissen expandiert werden können.

Die in der Figur 2 näher gezeigte Umformvorrichtung 2 weist ein Blasrad 20 auf, welches in Umlaufrichtung 21 umläuft. Mit dem Blasrad 20 laufen insgesamt acht Blasstationen 1 derart um, dass die Blasformen 5 der einzelnen Blaseinrichtungen 3 (siehe bspw. Figur 1) im Bereich einer Umlaufstrecke 22 mittels eines Öffen- und Schließmechanismus (hier nicht gezeigt) geöffnet und wieder verschlossen werden können.

Die Umlaufstrecke 22 befindet sich in diesem Ausführungsbeispiel im Bereich eines Auslaufsterns 23 zum Entnehmen der fertig geblasenen Kunststoffbehältnisse aus den jeweils vorbei laufenden, geöffneten Blasformen 5 und eines Einlaufsterns 24 zum Einsetzen der Kunststoffvorformlinge in die jeweils vorbei laufenden, geöffneten Blasformen 5. Hierzu weist sowohl der Einlaufstern 24 als auch der Auslaufstern 23 entsprechende Handhabungselemente 25 auf (nur exemplarisch beziffert), mittels welchen entweder die Kunststoffvorformlinge (Einlaufstern 24) oder die Kunststoffbehältnisse (Auslaufstern 23) gehandhabt werden können.

Im Bereich der Umlaufstrecke 22, entlang welcher die Blasformen 5 geöffnet und die entsprechenden Bodenteile 11 unterhalb der jeweiligen Bodenteil-Funktionsposition 11A (siehe Figur 1) abgesenkt sind, befindet sich radial von dem Blasrad 20 beabstandet eine Sterilisationseinrichtung 30 mit Ausbringelementen 31 zum Ausbringen von Sterilisationsmittel 32.

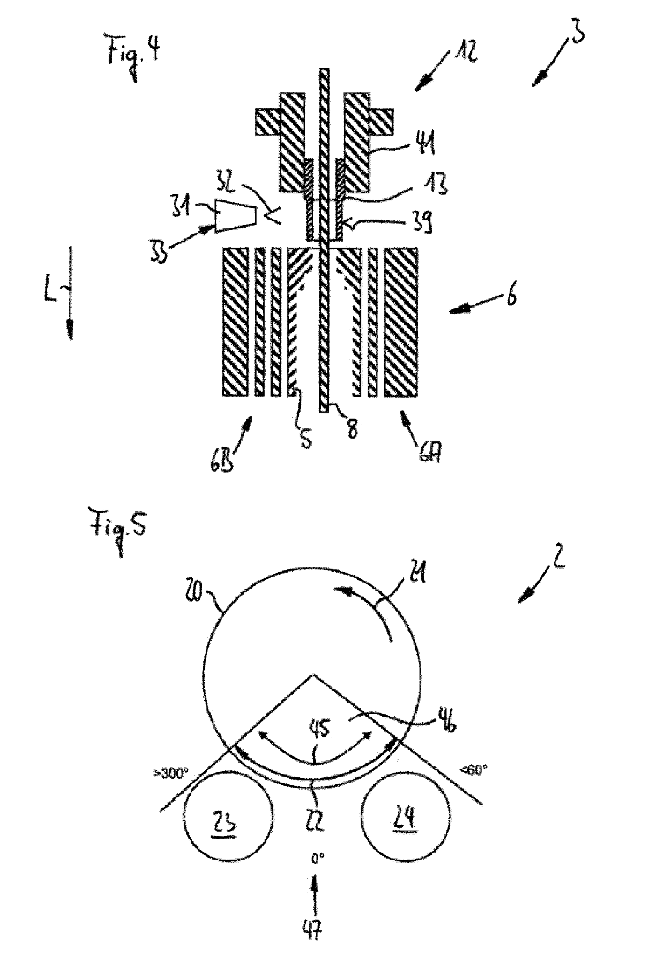

Die Ausbringelemente 31 umfassen in diesem Ausführungsbeispiel jeweils eine Sprühdüse 33 (siehe insbesondere Figuren 4, 7, 8, 10 bzw. 11), um die Sterilisationsmittel 32 von außerhalb der Reckstange 8 und der jeweiligen Blasform 5 auf die Mantelfläche 35 (siehe insbesondere Figur 1) der Reckstange 8 zu sprühen, so dass die Außenseite 36 der Reckstange 8 in einem einfach in einen Blaszyklus integrierten Sterilisationsprozess sterilisiert werden kann. Hier soll nochmal erwähnt werden, dass die Sprühdüse 33 auch Reinigungsmittel versprühen kann. Die Reinigung und Sterilisation werden hier und nachher synonym verwendet.

Hierzu wird die Reckstange 8 im Bereich der Umlaufstrecke 22 in den Hohlraum 7 der Blasform 5 hinein verlagert, wie dies nach der Darstellung gemäß der Figur 3 gut zu erkennen ist. Hierbei ist die Reckstange 8 mit ihrem unteren Ende 37 bis über die Bodenteil-Funktionsposition 11A hinaus verlagert, so dass Bereiche am oberen Ende 38 der Reckstange 8 nicht mehr von der Druckbeaufschlagungseinrichtung verdeckt sind und somit auch durch die von außen aufgesprühten Sterilisationsmittel 32 erreicht und sterilisiert werden können.

Gleichzeitig könnte auch eine Sterilisation der Mantelfläche 39 der Blasdüse 13 erfolgen, wenn diese alternativ oder anschließend kumulativ zumindest teilweise in die Blasform 5 hinein verlagert wird.

Darüber hinaus ist es denkbar, dass gleichzeitig auch eine Sterilisation von Blasluftkanälen 40 der Blasdüse 13 und/oder der Reckstange 8 vorgenommen wird.

In Figur 3 sieht man, wie die Blasdüse 13 in eine Position innerhalb der Blasform 5 gebracht wurde, in der sie im normalen Blasprozess nicht anzutreffen ist. Normalerweise setzt die Blasdüse auf der Oberfläche der Blasform 5 oder auf dem zu blasenden Vorformling zur Abdichtung im Blasprozess auf. Zur Sterilisation kann die Blasdüse noch weiter herunter gefahren werden, als es in der Abdichtposition der Fall ist.

Wie weiter hinsichtlich der Darstellung gemäß der Figur 4 gut zu erkennen ist, ist die Sprühdüse bzw. das Sterilisationsmittel 33 lediglich aus einem Ventilblock 41 eines Blaskopfes 12 der Druckbeaufschlagungseinrichtung in Richtung der Blasform 5 heraus gefahren, um in den Wirkbereich der Sprühdüse 33 zu gelangen.

Die Reckstange 8 kann so an der Sprühdüse 33 vorbei gefahren werden, während die Sprühdüse 33 das Sterilisationsmittel 32 versprüht. Es können auch mehrere übereinander entlang der Längsrichtung angeordnete Sprühdüsen 33 radial neben der Reckstange 8 platziert sein. Alternativ oder kumulativ kann die Sprühdüse 33 entlang der Längsrichtung L verlagerbar sein, so dass sie auch entlang der Reckstange 8 fahren kann, um diese von oben bis unten mit Sterilisationsmittel 32 zu besprühen. Die Sprühdüse könnte auch mit einem motorischen Antrieb verlagerbar sein und/oder über denselben oder einen zusätzlichen Antrieb drehbar. Auch eine Verstellung in drei Achsen ist denkbar, um die Reckstange auch "von hinten", also von der Blasradmitte radial nach außen bzw. von dem Reckstangenhalter in Richtung der Mittelachse der Blasform zu besprühen.

Alternativ können auch mindestens zwei oder mehrere Sprühdüsen um die Reckstange herum positioniert werden (nicht gezeigt). Auch können Reckstange und Blasdüse während des Besprühens mindestens einmal zueinander verfahren werden, um unterschiedliche Bereiche entlang der Längsachse der Reckstange und/oder der Blasdüse mit Reinigungs- und/oder Sterilisationsmittel zu reinigen/sterilisieren.

Alternativ könnten die Blasdüse und/oder die Reckstange drehbar um ihre Längsachse ausgeführt sein und während des Sterilisationsprozesses über einen Antrieb gedreht werden (nicht gezeigt). So könnte man auch alle Flächen in Umfangsrichtung der Reckstange oder Blasdüse mit nur einer Ausbringeinrichtung bzw. Düse erreichen.

Hinsichtlich der Darstellung der Figur 5 ist gut der Winkelbereich 45 zu erkennen, in welchem sich die vorstehend beschriebenen Umlaufstrecke 22 erstreckt. Die hier relevante Umlaufstrecke 22, entlang welcher die Blasformen 5 geöffnet sind, erstreckt sich in einem Winkelteilbereich 46 zwischen einem Winkelmaß > 300° und einem Winkelmaß < 60°. Die Position der Nulllage 47 = 0° liegt hierbei mittig zwischen dem Auslaufstern 23 und dem Einlaufstern 24. Wird nur ein Stern zum Ein- und Ausbringend er Behälter verwendet, so ist dieser entsprechend bei 0° angeordnet (nicht gezeigt). In dem Winkelteilbereich 46 sind die Reckstange 8 und die Blasdüse 13 normalerweise nach oben in den Ventilblock 41 eingefahren. Bei dem vorliegenden erfindungsgemäßen Verfahren ist zumindest die Reckstange 8 nach unten aus dem Ventilblock 41 herausgefahren, so dass diese mit Sterilisationsmittel 32, wie bereits erläutert, besprüht werden kann.

An dieser Stelle sei nochmals explizit erwähnt, dass die erfindungsgemäße Sterilisation auch in einem anderen Umfangsbereich des Blasrades 20 vorgenommen werden kann, wenn die Umformvorrichtung 2 entsprechend ausgestaltet ist. Dies trifft insbesondere dann zu, wenn etwa auch der Blasformträger 6 bzw. das Bodenteil 11 durch Elektromotoren (hier nicht gezeigt) angetrieben sind. Auch könnten zu diesem Zweck weitere Führungskurven vorgesehen sein.

Vorteilhaft an dem Winkelteilbereich 46 ist es jedoch, dass die Blasformen 5 dort zur Entnahme der Kunststoffbehältnisse bzw. Bestückung der Kunststoffvorformlinge sowieso geöffnet werden müssen. Ebenso wird in diesem Bereich der Blasformboden üblicherweise heruntergefahren, um die Behälter zu entformen. Insbesondere wenn die Blasform 5 und der Boden über Kurven bewegt werden, ist dieser Winkelbereich 46 von Vorteil, weil dann die Antriebe sowieso schon an dieser Stelle vorhanden sind. Dies kann hier somit für den vorliegenden Sterilisationsprozess sehr vorteilhaft zu Nutze gemacht werden. Es wäre aber auch denkbar, den Formträger bzw. den Boden über im Sterilisationsmodus zustellbare Kurven außerhalb des Winkelbereichs zu öffnen und dort die Sterilisation stattfinden zu lassen.

Bei rein elektrisch angesteuerten Boden- und Seitenteilen der Blasform wäre es unerheblich, in welchem Umfangsbereich des Blasrades 20 die Reinigung oder Sterilisation stattfindet. U.U. wäre dann sogar in Umlaufrichtung 21 gesehen ein Bereich besser geeignet, welcher zwischen 60° und 300° angeordnet ist. Hier hätte man aufgrund der fehlenden Transportsterne 23, 24 mehr Platz zur Verfügung.

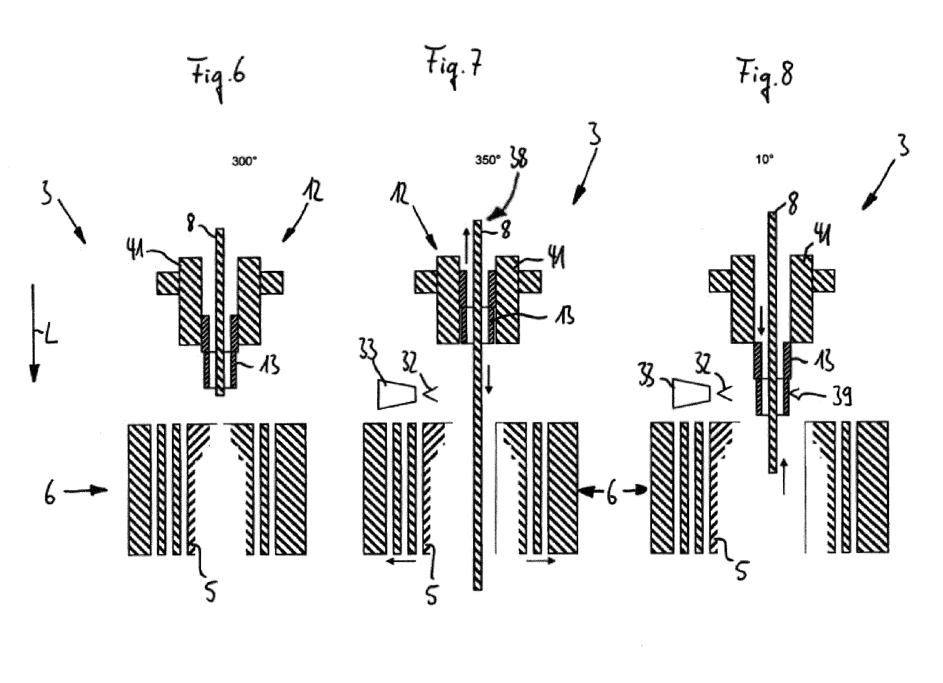

Nach der Darstellung gemäß der Figur 6 ist die Blasform 5 bei einer Winkelposition von 300° noch geschlossen. Dreht das Blasrad 20 in Umlaufrichtung 21 weiter und erreicht die Blasform 5 eine Winkelposition von 350° (Figur 7), ist die Blasform 5 bereits geöffnet. Die Reckstange 8 wird bis in die Blasform 5 zwischen die beiden Blasformhälften 9 und 10 außerplanmäßig hinein verlagert, so dass Reckstange 8 mit Sterilisationsmitteln 32 aus der Sprühdüse 33 besprüht werden kann. Hierbei ist die Blasdüse 13 vollständig in den Blaskopf 12 der Druckbeaufschlagungseinrichtung eingefahren, so dass die Blasdüse 13 nicht mehr vor dem Ventilblock 41 hervorsteht. Somit kann die Reckstange 8 beim Aus- und Einfahren auch weiter zu ihrem oberen Ende 38 sterilisiert werden. Wird die Blasform bis in eine Winkelposition von 10° (Figur 8) gedreht, fährt die Reckstange 8 wieder ein und die Blasdüse 13 aus, so dass hierbei nun die Mantelfläche 39 der Blasdüse 13 sterilisiert werden kann.

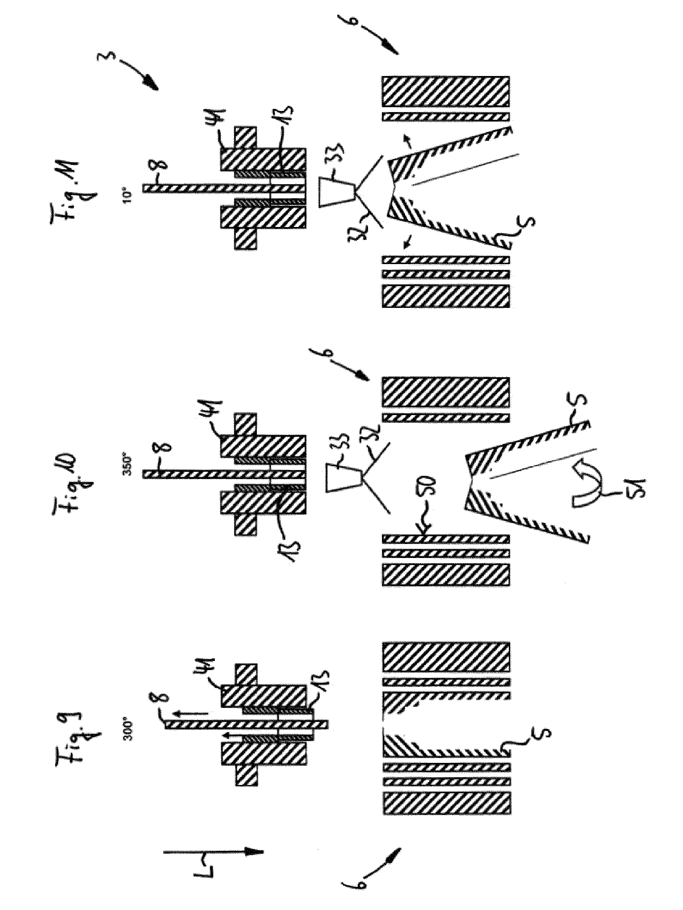

Kumulativ kann im Anschluss an die in den Figuren 6 bis 8 gezeigte Sterilisation auch noch die Mutterforminnenseite 50, welche die eigentliche Blasform 5 umgibt, sogleich mit sterilisiert werden, wie in den Darstellungen gemäß der Figuren 9 bis 11 gezeigt. Auch ist eine Sterilisation der Innenwandung der Blasform, gegen welche die Kunststoffvorformlinge expandiert werden, möglich.

Hierzu ist beispielsweise die Sprühdüse 33 verlagerbar an der Sterilisationseinrichtung 30 angeordnet, so dass sie beispielsweise hinsichtlich der Winkelpositionen 350° (Figur 10) und 10° (Figur 11) zentrisch oberhalb der Blasform 5 derart angeordnet werden kann, dass Sterilisationsmittel 32 von oben nach unten in Längsrichtung L auf die Blasform 5 gesprüht werden können (bzw. Strahlung bzw..Ladungsträger hierauf gerichtet werden können).

Die Figuren 9 - 11 zeigen ein Verfahren zum Sterilisieren der Mutterforminnenwände während eines Blasformwechsels. Hier können auch die Außenseiten der Blasformen sterilisiert werden.

Nach der Darstellung gemäß der Figur 9 ist die Blasform 5 bei der Winkelposition von 300° noch geschlossen. Die Reckstange 8 und die Blasdüse 13 werden in den Ventilblock 41 eingefahren. Dreht das Blasrad 20 in Umlaufrichtung 21 weiter und erreicht die Blasform 5 hierbei die Winkelposition von 350° (Figur 10), ist die Blasform 5 bereits geöffnet, und zwischen dem Blaskopf 12 und der Blasform 5 ist die Sprühdüse 33 angeordnet. Die Reckstange 8 und die Blasdüse 13 bleiben eingefahren. Die Sterilisationsmittel 32 können nun von oben auf die Blasform 5 und auf die Mutterforminnenseite 50 aufgebracht werden. Hierbei kann die Blasform 5 noch gemäß der Drehrichtung 51 um eine Horizontalachse gedreht werden, um sowohl von außen als auch von innen mit Sterilisationsmitteln 32 behandelt werden zu können. Anschließend wird die Blasform 5 (oder eine neue Blasform) auf Höhe der Winkelposition von 10° (Figur 11) wieder zurück an den Blasformträger 6 verlagert und ist somit wieder für einen weiteren Blasprozess einsatzbereit. Bei Verwendung einer neuen Blasform können auch sowohl die alte als auch die neue auf diesem Wege vor dem Einsetzen bzw. nach dem Herausnehmen aus der Blasstation sterilisiert werden. Insbesondere eignet sich zum Wechsel ein Roboter bzw. Automat, welche die Blasformen dementsprechend an Sterilisationsdüsen so vorbeibewegt, dass alle Fläche sterilisiert bzw. gereinigt werden können (nicht gezeigt).

An dieser Stelle sei nochmals erwähnt, dass anstelle der Sprühdüse 33 auch ein Strahlenemitter als Ausbringelement 31 für Sterilisationsmittel 32 eingesetzt werden kann, um Sterilisationsmittel in Form von Ladungsträgern ausstrahlen zu können.

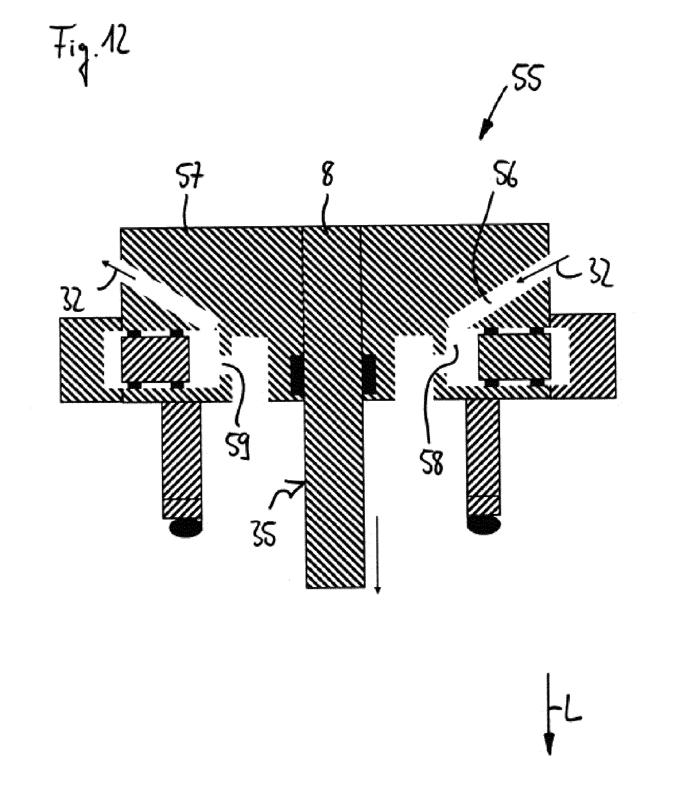

Bei dem in der Figur 12 gezeigten Ausführungsbeispiel erfolgt die Behandlung der Reckstange 8 mit Sterilisationsmitteln 32 durch die in einer alternativen Druckbeaufschlagungseinrichtung 55 vorgesehenen Blasluftkanäle 56 an einem alternativ ausgestalteten Ventilblock 57. Die Sterilisationsmittel 32 werden hierbei durch einen ersten Blasluftkanal 58 bis an die Mantelfläche 35 der Reckstange 8 geleitet, wenn diese aus dem alternativen Ventilblock 57 herausfährt. Dies geschieht idealerweise bei geschlossener Blasform 5, so dass die durch den ersten Blasluftkanal 58 eingeleiteten Sterilisationsmittel 32 sogleich aus einem weiteren Blasluftkanal 59 wieder aus der Blasform 5 herausgeleitet werden können. Im normalen Arbeitsbetrieb können diese Kanäle, wie oben gesagt zum Beaufschlagen der Kunststoffvorformlinge mit Blasluft dienen. In einer alternativen Ausgestaltung wird Sterilisationsmittel aus mindestens einem, bevorzugt aus beiden Kanälen 58, 59 geleitet, um die heruntergefahrene und/oder herunter- oder herauffahrende Reckstange 8 zu sterilisieren. Das insbesondere in diesem Fall eingesetzte Sterilisationsmittel ist gasförmiges H2O2, welches sich nach dem Erreichen der Reckstangenaußenoberfläche auch noch weiter zu den Blasformen und evtl. außerhalb der Blasform in der Maschine verteilt. Wichtig ist nur, dass die Reckstange zumindest zu einem Zeitpunkt ausgefahren ist, während das Sterilisationsmittel aus dem Ventilblock strömt. Zusätzlich kann auch bei diesem Prozess die Blasdüse zu mindestens einem Zeitpunkt voll ausgefahren sein, so dass die Außenwände der Blasdüse ebenso so weit wie möglich sterilisiert werden. In dem Ausführungsbeispiel nach Figur 12 ist die Blasdüse zusammen mit dem Ventilblock 57 bewegbar. Hier sind es dann eigentlich die Flächen des Ventilblocks, die bei einem Ausfahren sterilisiert werden können. In den Beispielen nach Figuren 1- 11 ist die Blasdüse relativ zum Ventilblock bewegbar.

In beiden Fällen kann die Blasform beim Sterilisieren geöffnet oder geschlossen sein, oder alternierend auf- und zugemacht werden.

Die nicht mit Bezugszeichen versehenen schwarzen, viereckigen Flächen zwischen Reckstange 8 und Block 57 stellen die oben erwähnte Blasluftdichtung dar. Insbesondere befindet sich zumindest ein kleiner Teil der Reckstange 8, welcher sich bei maximal ausgefahrener Reckstange während des Reckens kurz oberhalb dieser Dichtung befindet, während des Sterilisierens oder Reinigens so weit entfernt von der Dichtung, hier unten von der Dichtung, so dass dieser auch sterilisiert wird. Bei Blasstationen, in denen nach oben, also weg vom Erdmittelpunkt, gereckt wird, befindet sich dieser kleine Teil dann oben.

Die Blasluftdichtung wird in den Figuren 1-11 nicht gezeigt, kann aber bei allen Ausführungsformen vorhanden sein.

Es versteht sich, dass es sich bei den vorstehend erläuterten Ausführungsbeispielen lediglich um erste Ausgestaltungen der erfindungsgemäßen Vorrichtung zum Umformen von Kunststoffvorformlingen zu Kunststoffbehältnissen handelt. Insofern beschränkt sich die Ausgestaltung der Erfindung nicht auf diese Ausführungsbeispiele.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Blasstation
- 2: Umformvorrichtung
- 3: Blaseinrichtung
- 4: Hauptträger
- 5: Blasform
- 6: Blasformträger
- 6A: erste Blasformträgerhälfte
- 6B: zweite Blasformträgerhälfte
- 7: Hohlraum
- 8: Reckstange
- 9: erste Blasformhälfte
- 10: zweite Blasformhälfte
- 11: Bodenteil
- 11A: Bodenteil-Funktionsposition
- 12: Blaskopf
- 13: Blasdüse
- 20: Blasrad
- 21: Umlaufrichtung
- 22: Umlaufstrecke
- 23: Auslaufstern
- 24: Einlaufstern
- 25: Handhabungselemente
- 30: Sterilisationseinrichtung/Reinigungseinrichtung
- 31: Ausbringelemente
- 32: Sterilisationsmittel/Reinigungsmittel
- 33: Sprühdüse
- 35: Mantelfläche
- 36: Außenseite
- 37: unteres Ende
- 38: oberes Ende
- 39: Mantelfläche
- 40: Blasluftkanäle
- 41: Ventilblock
- 45: Winkelbereich
- 46: Winkelteilbereich
- 47: Nulllage
- 50: Mutterforminnenseite
- 51: Drehrichtung
- 55: alternative Druckbeaufschlagungseinrichtung
- 56: Blasluftkanäle
- 57: alternativer Ventilblock
- 58: erster Blasluftkanal
- 59: weiterer Blasluftkanal

- L: Längsrichtung

## Patentansprüche

1. Verfahren zum Umformen von Kunststoffvorformlingen zu Kunststoffbehältnissen, bei welchem die Kunststoffvorformlinge innerhalb einer Blasform (5) unter Zuhilfenahme eines Expansionsmittels und einer Reckstange (8) zu den Kunststoffbehältnissen expandiert werden, und bei welchem zumindest die Blasform (5) und/oder die Reckstange (8) bedarfsweise wenigstens teilweise mit Sterilisationsmittel (32) gereinigt und/oder sterilisiert werden,
**dadurch gekennzeichnet, dass**
zum Reinigen und/oder Sterilisieren der Außenseite (36) der Reckstange (8) diese Reckstange (8) zumindest teilweise in die Blasform (5) hinein verlagert wird, und dass die Sterilisationsmittel (32) von einem außerhalb der Reckstange (8) angeordneten Ausbringelement (31) und/oder einer Blasdüse (13) an zumindest einen Teil der Mantelfläche (35) der Reckstange (8) gebracht werden, während die Reckstange (8) in der Blasform (5) angeordnet ist.

2. Verfahren nach Anspruch 1,
**dadurch gekennzeichnet, dass**
ein Bereich der Mantelfläche der Reckstange gereinigt und/oder sterilisiert wird, welcher in einem normalen Produktionsbetrieb ständig von der Blasdüse verdeckt ist und zwar durch Hochfahren der Blasdüse und/oder durch weiteres Herunterfahren der Reckstange als im Produktionsmodus.

3. Verfahren nach Anspruch 1 oder 2,
**dadurch gekennzeichnet, dass** zum Reinigen und/oder Sterilisieren einer Blasdüse (13) zum Einbringen des Expansionsmediums in die Blasform (5) diese Blasdüse (13) zumindest teilweise in die Blasform (5) hinein verlagert wird.

4. Verfahren nach einem der Ansprüche 1 bis 3,
**dadurch gekennzeichnet, dass**
die Sterilisationsmittel (32) und/oder Reinigungsmittel bei zumindest teilweise geöffneter Blasform (5) von außen an die Mantelfläche (35) der Reckstange (8) und/oder an die Mantelfläche (39) einer Blasdüse (13) gebracht werden und/oder die Sterilisationsmittel (32) und/oder Reinigungsmittel bei zumindest teilweise geöffneter Blasform (5) von außerhalb der Blasform (5) an die Mantelfläche (35) der Reckstange (8) und/oder an die Mantelfläche (39) einer Blasdüse (13) gebracht werden.

5. Verfahren nach einem der Ansprüche 1 bis 4,
**dadurch gekennzeichnet, dass**
die Reckstange (8) und/oder eine Blasdüse (13) bei einem Herausfahren aus einem Blaskopf (12), bzw. Ventilblock (41, 57) und/oder bei einem Hereinfahren in den Blaskopf (12) mit Sterilisationsmitteln (32) und/oder Reinigungsmittel bestrahlt werden.

6. Verfahren nach einem der Ansprüche 1 bis 5,
**dadurch gekennzeichnet, dass**
die Reckstange (8) zumindest teilweise über die Bodenteil-Funktionsposition (11A) einer betriebsbereiten Blasform (5) hinaus verlagert wird.

7. Verfahren nach einem der Ansprüche 1 bis 6,
**dadurch gekennzeichnet, dass**
die Reckstange (8) und/oder eine Blasdüse (13) in die Blasform (5) hinein verlagert wird, wenn die Blasform (5) eine Umlaufstrecke (22) zwischen einem Auslaufbereich (23) zum Ausbringen eines expandierten Kunststoffbehältnisses und einem Einlaufbereich (24) zum Einbringen eines Kunststoffvorformlings in die Blasform (5) durchläuft.

8. Vorrichtung (2) zum Umformen von Kunststoffvorformlingen zu Kunststoffbehältnissen mit wenigstens einer Blaseinrichtung (3) umfassend eine Blasform (5) und eine Reckstange (8), und mit wenigstens einer Sterilisationseinrichtung und/oder Reinigungseinrichtung (30), mittels welcher die Blaseinrichtung (3) zumindest teilweise sterilisierbar und/oder reinigbar ist, insbesondere zum Durchführen des Verfahrens nach einem der vorstehenden Ansprüche,
**dadurch gekennzeichnet, dass**
die wenigstens eine Sterilisationseinrichtung und/oder Reinigungseinrichtung (30) derart im Bereich der Blasform (5) angeordnet ist, dass die Reckstange (8) von außerhalb der Reckstange (8) mit Sterilisationsmittel und/oder Reinigungsmittel (32) behandelt werden kann, wenn die Reckstange (8) in die Blasform (5) hinein verlagert ist.

9. Vorrichtung (2) nach Anspruch 8,
**dadurch gekennzeichnet, dass**
die wenigstens eine Sterilisationseinrichtung (3) und/oder Reinigungseinrichtung derart im Bereich der Blasform (5) angeordnet ist, dass die Reckstange (8) von außerhalb der Blasform (5) mit Sterilisationsmittel (32) und/oder Reinigungsmittel behandelt werden kann, wenn die Reckstange (8) in die Blasform (5) hinein verlagert ist.

10. Vorrichtung (2) nach Anspruch 8 oder 9,
**dadurch gekennzeichnet, dass**
die Sterilisationseinrichtung (30) und/oder Reinigungseinrichtung wenigstens ein Ausbringelement (31) zum Ausbringen der Sterilisationsmittel (32) und/oder Reinigungsmittel aufweist und die Ausbringeinrichtung bzw. Düse der Sterilisationseinrichtung (3) und/oder der Reinigungseinrichtung in der Höhe (entlang der Längsrichtung L) im Bereich zwischen einem Ventilblock (57, 41) der Blasstation und der Blasform (5) angeordnet ist.

11. Vorrichtung (2) nach wenigstens einem der Ansprüche 8 - 10,
**dadurch gekennzeichnet, dass**,
das wenigstens eine Ausbringelement (31) radial neben der in die Blasform (5) hinein verlagerten Reckstange (8) oder stationär am Umfang eines eine Vielzahl an Blaseinrichtungen (3) umfassenden Blasrades (20) angeordnet ist.

12. Vorrichtung (2) nach einem der Ansprüche 8 bis 11,
**dadurch gekennzeichnet, dass**
das wenigstens eine Ausbringelement (31) radial und/oder axial und/oder drehbar verlagerbar gegenüber der Reckstange (8) angeordnet ist und/oder das wenigstens eine Ausbringelement (31) eine Sprühdüse (33) oder einen Strahlenemitter umfasst.

13. Verfahren zum Umformen von Kunststoffvorformlingen zu Kunststoffbehältnissen mit einem zumindest in einem Produktions- bzw. Betriebsmodus kontinuierlich angetriebenen Blasrad, an welchem eine Vielzahl von Blasstationen angeordnet sind und jede Blasstation relativ zum Blasrad bewegliche Elemente wie insbesondere eine Reckstange (8) zur Längsdehnung der Vorformlinge oder mindestens eine öffenbare Blasform (5) zum Ausbringen der expandierten Kunststoffbehältnisse umfasst, bei welchem die Kunststoffvorformlinge innerhalb der Blasform (5) unter Zuhilfenahme eines Expansionsmittels und der Reckstange (8) zu den Kunststoffbehältnissen expandiert werden, und bei welchem in einem Reinigungs- und/oder Sterilisationsmodus und/oder im Produktionsmodus zumindest ein bewegtes Element mit Reinigungs- und/oder Sterilisationsmittel (32) gereinigt und/oder sterilisiert werden,
**dadurch gekennzeichnet, dass**
zumindest ein bewegtes Element im Reinigungs- und/oder Sterilisationsmodus an eine Position und/oder in eine Orientierung verfahren wird, welche sich von den Positionen bzw. Orientierungen des normalen Betriebsmodus unterscheidet.

14. Verfahren nach Anspruch 13, **dadurch gekennzeichnet, dass** in der Position oder Orientierung mindestens eine Fläche des Elements sterilisiert und/oder gereinigt wird, deren Zugänglichkeit für eine Reinigung und/oder Sterilisation im normalen Produktionsmodus, beispielsweise aufgrund der Anordnung hinter Dichtungen oder anderen Elementen, beschränkt wird.

15. Verfahren nach Anspruch 13 oder 14, wobei es sich bei dem Element um mindestens einen Teil einer Blasform (5) handelt und dieser Teil (5) während eines zwischen zwei aufeinander folgenden Produktionsmodi durchgeführten Formwechselmodus durch einen Teil einer anderen Blasform (5) ersetzt wird und wobei der entnommene Teil (5) nach der Entnahme und/oder der neu einzusetzende Teil (5) vor dem Einsetzen gereinigt und/oder sterilisiert wird, wobei sich bevorzugt der Reinigungs- und/oder Sterilisationsmodus mit dem Formwechselmodus und/oder dem Produktionsmodus zumindest zeitweise überschneidet.
